# FASCICULE DE BREVET EUROPEEN

(11) **EP 1 489 360 B1**
(45) Date de publication et mention de la délivrance du brevet: **03.05.2006**
(21) Numéro de dépôt: 04291486.1
(22) Date de dépôt: 14.06.2004
(51) Int. Cl.: F23R 3/50, F23R 3/00, F23R 3/60

(54) **Dispositif d'étanchéité de bougie non soudé sur la paroi de chambre**
Nicht mit der Kammerwand verschweisste Dichtungsanordnung für ein Zündrohr
Gasket assembly for igniter tube non-welded to the chamber wall

(30) Priorité: 20.06.2003 FR 0307511
(43) Date de publication de la demande: 22.12.2004
(73) Titulaire: SNECMA, 75015 Paris (FR)
(72) Inventeur: Hernandez, Didier Hippolyte, 77720 Quiers (FR); De Sousa, Mario César, 77240 Cesson la Fôret (FR); Commaret, Patrice André, 77950 Rubelles (FR)
(74) Mandataire: Barbin le Bourhis, Joel

(56) Documents cités:
- EP-A- 1 258 682
- EP-A- 1 342 954
- GB-A- 1 402 540
- US-B1- 6 351 949

## Description

L'invention concerne une chambre de combustion comportant une paroi de chambre disposée radialement à l'intérieur d'un carter, une bougie d'allumage du mélange air-carburant montée sur ledit carter et comportant un corps dont l'extrémité libre est disposée avec un jeu important, pour compenser les déplacements relatifs entre ledit carter et ladite paroi de chambre, dans une ouverture ménagée dans ladite paroi de chambre, et un dispositif d'étanchéité prévu entre ledit corps et le pourtour de ladite ouverture, ce dispositif comportant un guide-bougie annulaire traversé par ledit corps et monté coulissant à l'extrémité radialement extérieure d'un support annulaire dont la base est solidaire dudit pourtour.

Dans les chambres de combustion conventionnelles la paroi de chambre est réalisée en métal, et le support du guide-bougie est également réalisé dans un métal compatible avec celui de la paroi de chambre La base du support est soudée sur la face externe de la paroi de chambre autour de l'ouverture.

Avec les augmentations de température régnant dans les chambres de combustion, qui sont nécessaires pour améliorer les performances des moteurs d'aviation, l'utilisation de parois de chambre métalliques est rédhibitoire. Il devient impossible de souder le support du guide-bougie sur la paroi de la chambre. Cest notamment le cas lorsque la paroi de chambre est réalisée en matériau composite comportant des fibres de carbone noyées dans une matrice céramique.

US 6 351 949 montre à la figure 2 une chambre de combustion du type mentionnée dans l'introduction du présent mémoire, dans laquelle la base du support du guide-bougie semble être fixée par soudage sur la face externe de la paroi de chambre autour de l'ouverture. Ce document montre également des moyens amovibles pour introduire de l'air dans la chambre de combustion comportant un manchon cylindrique traversant un orifice de la paroi de chambre et présentant une collerette en appui sur la face interne de la paroi de chambre et des moyens de fixation mécaniques dudit manchon disposés sur la face externe de la paroi de chambre. Le manchon est réalisé en un matériau métallique résistant aux hautes températures et de préférence en un matériau céramique. Ce document ne suggère pas que le support du guide-bougie puisse comporter une collerette à son extrémité radialement intérieure pour être fixé de la même manière sur la paroi de chambre. D'ailleurs, le montage de ce support modifié serait impossible car le guide-bougie est retenu par une portion d'extrémité du support qui a un diamètre supérieur à celui de la base dudit support et le diamètre de l'ouverture serait inférieur à celui de la collerette et à celui de la portion d'extrémité.

EP-A-1 258 682 montre une chambre de combustion du type mentionnée dans l'introduction du présent mémoire.

Le but de l'invention est de proposer d'autres moyens de fixation du support du guide-bougie sur la paroi de chambre, qui s'applique à des pièces non compatibles entre elles ou ayant des coefficients de dilatation différents.

La chambre de combustion selon l'invention est caractérisée par le fait que le support est solidarisé à la partie radialement extérieure d'une cheminée traversant ladite ouverture et présentant à son extrémité radialement intérieure une collerette en appui contre la face interne de la paroi de chambre et par le fait qu'il est prévu un circuit de refroidissement de ladite collerette.

La cheminée peut ainsi être réalisée dans un matériau différent de celui de la paroi de chambre et notamment en métal compatible avec celui du support, du fait qu'il est prévu un circuit de refroidissement.

Avantageusement, le circuit de refroidissement est réalisé par des cannelures ménagées à la périphérie de la cheminée et sur la face de la collerette qui est en appui contre la paroi de chambre et par des passages ménagés dans le support et débouchant dans lesdites cannelures.

Pour faciliter le montage, la cheminée présente à sa périphérie un doigt qui s'engage au moins dans une encoche ménagée à la périphérie de l'ouverture.

Cette disposition permet de positionner sans erreur et en aveugle la collerette sur la face interne de la paroi de chambre. Ceci est d'autant plus pratique que la courbure de la collerette doit épouser la courbure dela paroi de chambre.

Très avantageusement, le support est fixé sur la partie extérieure de la cheminée par soudage.

Selon un premier mode de réalisation de l'invention, le pourtour de l'ouverture est pincé entre la collerette et la base du support, ledit support entourant la partie extérieure de la cheminée.

Les passages sont alors constitués par des orifices traversant la paroi du support, et la base du support présente une encoche dans laquelle s'engage l'extrémité du doigt de la cheminée.

Cette disposition permet de positionner parfaitement le support sur la cheminée afin que les orifices débouchent dans les cannelures.

Selon un deuxième mode de réalisation de l'invention, la cheminée est fixée sur le pourtour de l'ouverture au moyen d'un écrou interposé entre la paroi de chambre et la base du support.

Dans ce cas, les passages sont formés par des fentes ménagées dans la base du support.

D'autres avantages et caractéristiques de l'invention ressortiront à la lecture de la description suivante faite à titre d'exemple et en référence aux dessins annexés dans lesquels :
- la figure 1 est une vue partielle et en coupe, selon un plan contenant l'axe, d'une chambre de combustion comportant une bougie d'allumage, avec un dispositif d'étanchéité selon un premier mode de réalisation de l'invention ;
- la figure 2 montre un deuxième mode de réalisation du dispositif d'étanchéité selon l'invention ; et
- la figure 3 est une vue en perspective et éclatée du dispositif d'étanchéité selon le premier mode de réalisation de l'invention.

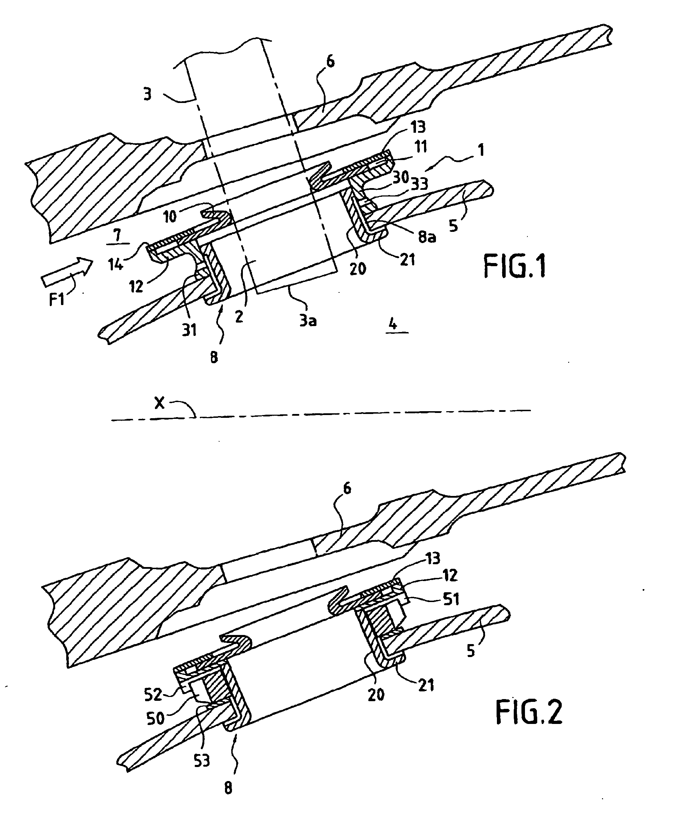

Les figures 1 à 3 montrent un dispositif d'étanchéité 1 disposé entre le corps 2 d'une bougie d'allumage 3 du mélange air-carburant dans l'enceinte 4 d'une chambre de combustion d'axe X délimitée radialement vers l'extérieur par une paroi de chambre 5 elle-même disposée à l'intérieur d'un carter 6 portant la bougie 3. Le carter 6 et la paroi de chambre 5 délimitent entre eux un canal annulaire 7 dans lequel circule un débit d'air F1, issu du compresseur, et destiné au refroidissement de la paroi de chambre, et éventuellement au refroidissement des carters et turbine, ainsi qu'à la fourniture d'un air de dilution dans l'enceinte 4.

L'extrémité 3a radialement intérieure de la bougie 3 est disposée avec un jeu J important dans une ouverture 8 ménagée dans la paroi de la chambre 5. Le jeu J est calculé suffisamment grand pour permettre les déplacements relatifs entre le carter 6 et la paroi de chambre 5, par suite des dilatations.

Le dispositif d'étanchéité 1 comporte un guide-bougie 10 annulaire qui entoure le corps 2 de la bougie et qui est réalisé sous la forme d'un disque, monté coulissant dans un logement annulaire 11 prévu dans la portion radialement extérieure d'un support annulaire 12 solidarisé au pourtour 8a de l'ouverture 8.

Le logement annulaire 11 est délimité par un couvercle 13 soudé sur un bourrelet annulaire 14 formé à la périphérie de la face supérieure 15 du support 12. La hauteur du guide-bougie 10, et l'extension radiale du logement annulaire 11 par rapport à l'axe de la bougie est nettement supérieure au diamètre du guide-bougie 10 pour permettre le déplacement libre de ce dernier dans le logement lors des déplacements relatifs de la bougie et de la paroi de chambre 5.

Le support 12 du guide-bougie 10 est fixé, de préférence par soudage, sur la partie radialement extérieure d'une cheminée 20, dont le diamètre est adapté à celui de l'ouverture 8 et qui présente à son extrémité radialement intérieure une collerette 21 destinée à être en appui contre la face intérieure du pourtour 8a de l'ouverture 8.

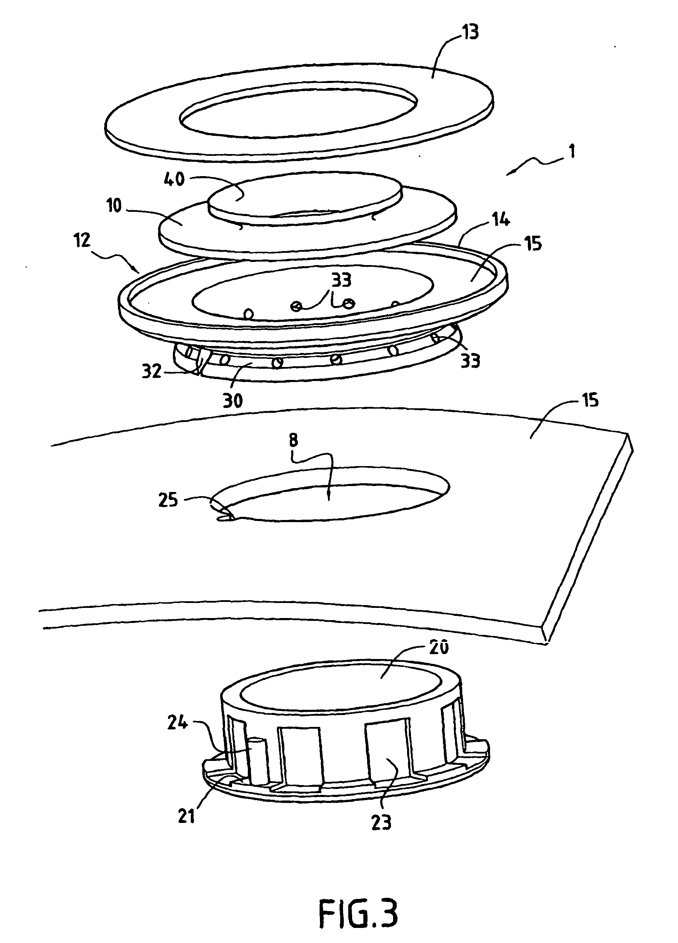

Ainsi que cela se voit clairement sur la figure 3, la cheminée 20 et la collerette 21 présentent des cannelures 23 destinées à recevoir un débit d'air de refroidissement de la cheminée 20 et surtout de la collerette 21 qui, logeant dans l'enceinte 4 de la chambre de combustion, est soumise à de fortes températures. On voit également sur la figure 3 que la base de la cheminée 20 présente à sa périphérie un doigt 24, et que le pourtour 8a de l'ouverture 8 présente une encoche 25. Le doigt 24 est destiné à s'engager dans l'encoche 25. Cette disposition oblige à monter la cheminée 20 dans l'ouverture 8 dans une position angulaire prédéterminée, afin que la face supérieure de la collerette 21 s'applique avec précision contre la face interne du pourtour 8a, cette face de collerette étant conformée en fonction de la courbure de la paroi de chambre 5 autour de l'ouverture 8.

Les cannelures 23 sont réparties régulièrement à la périphérie de la cheminée 20, s'étendent axialement sur la quasi-totalité de la hauteur de la cheminée 20 et se prolongent radialement sur la face de la collerette 21 qui est en appui contre la face interne de la paroi de chambre 5.

Ces cannelures 23 sont alimentées en air de refroidissement par des passages prévus dans le support 12.

Selon un premier mode de réalisation de l'invention, montré sur les figures 1 et 2, le support 12 comporte un manchon 30 entourant la cheminée 20 et dont la base 31 est en appui sur la face externe du pourtour 8a, le pourtour 8a de l'ouverture 8 est ainsi pincé entre la collerette 21 et la base 31.

Comme on le voit sur la figure 3, la base 31 du support 12 comporte également une encoche 32 dans laquelle s'engage l'extrémité supérieure du doigt 24. Cette disposition permet un positionnement angulaire unique du support 12 sur la cheminée 20 et de cette dernière dans l'ouverture 8.

Le manchon 30 présente des orifices de ventilation 33 qui doivent déboucher en regard des cannelures 23 . Grâce à là l'insertion du doigt 24 dans l'encoche 32, les orifices 33 se positionnent automatiquement devant les cannelures 23 lors du montage, quelles que soient la répartition et la géométrie des cannelures 23, cette répartition et cette géométrie pouvant être hétérogènes et définies selon les zones préférentielles à refroidir.

Le montage du dispositif d'étanchéité 1 selon le premier mode réalisation se comprend aisément. On positionne la cheminée 20 dans l'ouverture 8, en l'introduisant par l'enceinte 4. Le doigt 24 coopérant avec l'encoche 25 assure le positionnement angulaire de la cheminée 20. On positionne ensuite le support 12 sur la cheminée 20 par l'extérieur de la paroi de chambre 5. La coopération du doigt 24 avec l'encoche 32 assure le positionnement angulaire du support 12. On fixe alors le support 12 sur la cheminée 25 par soudage. On dispose ensuite le guide-bougie 10 sur la face supérieure 15 du support 12, puis on fixe le couvercle 13 sur le bourrelet 14 par soudage. Le guide-bougie 10 est alors libre de se déplacer dans le logement 11. Le guide-bougie 10 présente dans sa zone radialement interne un entonnoir 40 évasé radialement vers l'extérieur qui permet de positionner le guide-bougie 10 dans le logement 11 lors de la mise en place de la bougie 3 sur le carter 6.

La figure 2 montre un deuxième mode de réalisation de l'invention, qui diffère du premier mode de réalisation décrit ci-dessus, par le fait que le support 12 ne comporte pas de manchon 30, ce manchon 30 étant remplacé par un écrou à encoches 50 coopérant avec un filetage ménagé à la périphérie de la cheminée 20, cette dernière présentant cependant des cannelures 23 et un doigt 24 de positionnement.

Le pourtour 8a de l'ouverture 8 est pincé entre la collerette 21 et l'écrou 50. Le support 12 qui, dans le présent cas, est de faible hauteur, est fixé par soudage sur l'extrémité radialement extérieure de la cheminée 20. L'air d'alimentation des cannelures 23 circule dans l'espace séparant le support 12 de la face supérieure de l'écrou 50. La face inférieure du support 12 peut également présenter des cannelures radiales. Pour réguler le débit d'air, le support 12 peut présenter sur sa face inférieure un bourrelet périphérique 51 entourant l'écrou 50 et dans lequel sont ménagées des fentes 52 pour alimenter les cannelures 23. Une rondelle élastique 53 peut être interposé entre la face externe du pourtour 8a et l'écrou 50, pour tenir compte de la courbure de la paroi de chambre 5.

## Revendications

1. Chambre de combustion comportant une paroi de chambre (5) disposée radialement à l'intérieur d'un carter (6), une bougie d'allumage (3) du mélange air-carburant montée sur ledit carter (6) et comportant un corps (2) dont l'extrémité libre (3a) est disposée avec un jeu important, pour compenser les déplacement relatifs entre ledit carter (6) et ladite paroi de chambre (5), dans une ouverture (8) ménagée dans ladite paroi de chambre (5), et un dispositif d'étanchéité (1) prévu entre ledit corps (2) et le pourtour (8a) de ladite ouverture (8), ce dispositif comportant un guide-bougie (10) annulaire traversé par ledit corps (2) et monté coulissant à l'extrémité radialement extérieure d'un support annulaire (12) dont la base est solidaire dudit pourtour (8a),
**caractérisée par le fait que** le support (12) est solidarisé à la partie radialement extérieure d'une cheminée (20) traversant ladite ouverture (8) et présentant à son extrémité radialement intérieure une collerette (21) en appui contre la face interne de la paroi de chambre (5) et **par le fait qu'**il est prévu un circuit de refroidissement (23, 33, 52) de ladite collerette (21).

2. Chambre selon la revendication 1, **caractérisée par le fait que** le circuit de refroidissement est réalisé par des cannelures (23) ménagées à la périphérie de la cheminée (20) et sur la face de la collerette (21) qui est en appui contre la paroi de chambre (5) et par des passages (33, 52) ménagés dans le support (12) et débouchant dans lesdites cannelures (23).

3. Chambre selon la revendication 2, **caractérisée par le fait que** la cheminée (20) présente à sa périphérie un doigt (24) qui s'engage au moins dans une encoche (25) ménagée à la périphérie de l'ouverture (8).

4. Chambre selon la revendication 3, **caractérisée par le fait que** le support (12) est fixé sur la partie extérieure de la cheminée (20) par soudage.

5. Chambre selon l'une des revendications 3 ou 4, **caractérisée par le fait que** le pourtour (8a) de l'ouverture (8) est pincé entre la collerette (21) et la base (31) du support (12), ledit support (12) entourant la partie extérieure de la cheminée (20).

6. Chambre selon la revendication 5, **caractérisée par le fait que** les passages sont constitués par des orifices (33) traversant la paroi du support (12).

7. Chambre selon la revendication 6, **caractérisée par le fait que** la base (31) du support (12) présente une encoche (32) dans laquelle s'engage l'extrémité du doigt (24) de la cheminée (20).

8. Chambre selon l'une des revendications 3 ou 4, **caractérisée par le fait que** la cheminée (20) est fixée sur le pourtour (8a) de l'ouverture (8) au moyen d'un écrou (50) interposé entre la paroi de chambre (5) et la base du support (12).

9. Chambre selon la revendication 8, **caractérisée par le fait que** les passages sont formés par des fentes (52) ménagées dans la base du support (12).

## Claims

1. A combustion chamber comprising a chamber wall (5) disposed radially inside a casing (6), an igniter plug (3) for igniting the air-fuel mixture, the plug being mounted on said casing (6) and comprising a body (2) with a free end (3a) that is disposed in an opening (8) formed through said chamber wall (5) with a large amount of clearance to accommodate relative displacement between said casing (6) and said chamber wall (5), and a sealing device (1) provided between said body (2) and the perimeter (8a) of said opening (8), said sealing device comprising an annular plug-guide (10) through which said body (2) passes, the plug-guide being slidably mounted at the radially-outer end of an annular support (12) whose base is secured to said perimeter (8a),
the combustion chamber being **characterised by** the fact that the support (12) is secured to the radially-outer portion of a chimney (20) passing through said opening (8) and presenting at its radially-inner end a collar (21) bearing against the inside face of the chamber wall (5), and by the fact that a cooling circuit (23, 33, 52) for said collar (21) is provided.

2. A chamber according to claim 1, **characterised by** the fact that the cooling circuit is implemented by fluting (23) formed in the periphery of the chimney (20) and on the face of the collar (21) which bears against the wall of the chamber (5) and by passages (33, 52) formed in the support (12) and opening out into said fluting (23).

3. A chamber according to claim 2, **characterised by** the fact that the chimney (20) presents at its periphery a finger (24) that engages at least in a notch (25) formed in the periphery of the opening (8).

4. A chamber according to claim 3, **characterised by** the fact that the support (12) is secured to the outer portion of the chimney (20) by welding.

5. A chamber according to claim 3 or claim 4, **characterised by** the fact that the perimeter (8a) of the opening (8) is clamped between the collar (21) and the base (31) of the support (12), said support (12) surrounding the outer portion of the chimney (20).

6. A chamber according to claim 5, **characterised by** the fact that the passages are constituted by orifices (33) passing through the wall of the support (12).

7. A chamber according to claim 6, **characterised by** the fact that the base (31) of the support (12) presents a notch (32) in which the end of the finger (24) of the chimney (20) is engaged.

8. A chamber according to claim 3 or claim 4, **characterised by** the fact that the chimney (20) is fixed to the perimeter (8a) of the opening (8) by means of a nut (50) interposed between the chamber wall (5) and the base of the support (12).

9. A chamber according to claim 8, **characterised by** the fact that the passages are formed by slots (52) formed in the base of the support (12).

## Patentansprüche

1. Brennkammer, aufweisend eine Kammerwand (5), die radial im Innern eines Gehäuses (6) angeordnet ist, eine Zündkerze (3) des Luft-Brennstoff-Gemisches, die an dem Gehäuse (6) angebracht ist und einen Korpus (2) aufweist, dessen freies Ende (3a) mit einem wesentlichen Spiel, um die Relativverlagerungen zwischen dem Gehäuse (6) und der Kammerwand (5) zu kompensieren, in einer in der Kammerwand (5) vorgesehenen Öffnung (8) angeordnet ist, und eine Dichtungseinrichtung (1), die zwischen dem Korpus (2) und dem Umfang (8a) der Öffnung (8) vorgesehen ist, wobei die Einrichtung eine ringförmige Kerzenführung (10) aufweist, die von dem Korpus (2) durchlaufen wird und verschiebbar an dem radial äußeren Ende einer ringförmigen Halterung (12), deren Basis mit dem Umfang (8a) verbunden ist, angebracht ist,
**dadurch gekennzeichnet, dass** die Halterung (12) mit dem radial äußeren Bereich eines Durchgangselements (20) verbunden ist, das die Öffnung (8) durchläuft und an seinem radial inneren Ende einen Kragen (21) anliegend gegen die innere Oberfläche der Kammerwand (5) aufweist, und durch die Tatsache, dass ein Kühlkreislauf (23, 33, 52) des Kragens (21) vorgesehen ist.

2. Kammer nach Anspruch 1, **dadurch gekennzeichnet, dass** der Kühlkreislauf durch Rillen (23) realisiert ist, die an der Peripherie des Durchgangselements (20) und an der Fläche des Kragens (21), die gegen die Kammerwand (5) anliegt, ausgebildet sind, und durch Passagen (33, 52), die in der Halterung (12) ausgebildet sind und in die Rillen (23) münden.

3. Kammer nach Anspruch 2, **dadurch gekennzeichnet, dass** das Durchgangselement (20) an seiner Peripherie einen Finger (24) aufweist, der zumindest in eine an der Peripherie der Öffnung (8) vorgesehene Kerbe eingreift.

4. Kammer nach Anspruch 3, **dadurch gekennzeichnet, dass** die Halterung (12) an dem äußeren Bereich des Durchgangselements (20) durch Schweißen befestigt ist.

5. Kammer nach einem der Ansprüche 3 oder 4, **dadurch gekennzeichnet, dass** der Umfang (8a) der Öffnung (8) zwischen dem Kragen (21) und der Basis (31) der Halterung (12) eingeklemmt ist, wobei die Halterung (12) den äußeren Bereich des Durchgangselements (20) umgibt.

6. Kammer nach Anspruch 5, **dadurch gekennzeichnet, dass** die Passagen durch Löcher (33), die durch die Wand der Halterung (12) verlaufen, gebildet sind.

7. Kammer nach Anspruch 6, **dadurch gekennzeichnet, dass** die Basis (31) der Halterung (12) eine Kerbe (32) aufweist, in die das Ende des Fingers (24) des Durchgangselements (20) eingreift.

8. Kammer nach einem der Ansprüche 3 oder 4, **dadurch gekennzeichnet, dass** das Durchgangselement (20) an dem Umfang (8a) der Öffnung (8) mittels einer Mutter (50) befestigt ist, die zwischen die Kammerwand (5) und die Basis der Halterung (12) zwischengelagert ist.

9. Kammer nach Anspruch 8, **dadurch gekennzeichnet, dass** die Passagen durch Schlitze (52) gebildet sind, die in der Basis der Halterung (12) vorgesehen sind.
